(19) Europäisches Patentamt
European Patent Office
Office européen des brevets

(11) EP 4 643 963 A1

(12) **EUROPEAN PATENT APPLICATION**
published in accordance with Art. 153(4) EPC

(43) Date of publication:
**05.11.2025 Bulletin 2025/45**

(21) Application number: **23912174.2**

(22) Date of filing: **26.12.2023**

(51) International Patent Classification (IPC):
***A63B 59/45** (2015.01)* ***A63B 59/42** (2015.01)*
***C08K 3/013** (2018.01)* ***C08K 3/04** (2006.01)*
***C08K 3/36** (2006.01)* ***C08L 83/05** (2006.01)*
***C08L 83/07** (2006.01)* ***A63B 102/16** (2015.01)*

(52) Cooperative Patent Classification (CPC):
**A63B 59/42; A63B 59/45; C08K 3/013; C08K 3/04; C08K 3/36; C08L 83/04;** A63B 2102/16

(86) International application number:
**PCT/JP2023/046729**

(87) International publication number:
**WO 2024/143396 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2022 JP 2022211916**

(71) Applicant: **CANON KABUSHIKI KAISHA**
**Tokyo 146-8501 (JP)**

(72) Inventors:
- **TERADA, Kenya**
**Tokyo 146-8501 (JP)**
- **UNO, Masashi**
**Tokyo 146-8501 (JP)**
- **URUSHIHARA, Shohei**
**Tokyo 146-8501 (JP)**
- **MORI, Hironori**
**Tokyo 146-8501 (JP)**
- **NOGUCHI, Atsushi**
**Tokyo 146-8501 (JP)**
- **SUGIYAMA, Ryo**
**Tokyo 146-8501 (JP)**
- **NAKAMURA, Minoru**
**Tokyo 146-8501 (JP)**

(74) Representative: **TBK**
**Bavariaring 4-6**
**80336 München (DE)**

(54) **TABLE TENNIS RUBBER SHEET AND TABLE TENNIS PADDLE**

(57) A table tennis rubber sheet which exhibits stable ball-hitting performance regardless of temperature fluctuations and which, even in environments where the table tennis rubber sheet is apt to comprise moisture, has the excellent ball-hitting performance. The table tennis rubber sheet at least comprises an elastomer sheet, wherein the elastomer sheet comprises a crosslinked silicone rubber as a binder, a hydrosilyl group content in the crosslinked silicone rubber is $5.0 \times 10^{-4}$ mol/g or less.

FIG.1A FIG.1B

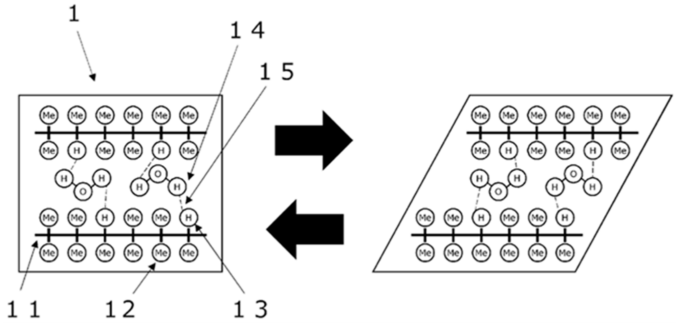


EP 4 643 963 A1

Processed by Luminess, 75001 PARIS (FR)

## Description

### TECHNICAL FIELD

The present disclosure relates to a table tennis rubber sheet and a table tennis racket.

### BACKGROUND ART

A table tennis racket comprises a rubber sheet formed of a rubber material attached on a plate called a blade. When hitting a ball, the rubber sheet is deformed due to the contact thereof with the ball, and the force of the deformation returning to the original state imparts rotation and speed to the ball.

In order to increase the amount of rotation given to the hit ball, it is advantageous if the rubber sheet is flexible and has a greater amount of deformation because the area of contact with the ball increases and the frictional force increases. Meanwhile, if merely a soft rubber sheet is used, the rate of recovery from deformation may be slow and the speed of the hit ball may decrease. In order to enhance both the amount of rotation and the speed of the hit ball, it is necessary to have both flexibility and recovering ability from deformation.

Moreover, from the viewpoint of material design of the rubber sheet, in order to further improve ball-hitting performance such as the amount of rotation and speed of a ball, the viscoelastic properties of the rubber constituting the rubber sheet are important. For example, PTL 1 indicates that a rubber sheet having excellent ball-hitting performance can be obtained by setting Young's modulus E' to 0.01 MPa or more and 1 MPa or less and setting loss tangent tan $\delta$ to 0.03 or less. In addition, PTL 1 discloses silicone rubbers, butadiene rubbers and natural rubbers as preferred materials for satisfying such viscoelastic properties.

Further, PTL 2 indicates that a rubber sheet formed of a silicone rubber can suppress a viscoelastic change due to temperature. By using such a rubber sheet, it is possible to play with stable ball-hitting performance even when, for example, the temperature of a match site changes.

### CITATION LIST

### PATENT LITERATURE

- [PTL 1] Japanese Patent Laid-Open No. 2011-056004
- [PTL 2] Japanese Patent Laid-Open No. 2011-056005

### SUMMARY OF INVENTION

### TECHNICAL PROBLEM

Nonetheless, according to the research conducted by the inventors of the present application, the rubber sheet formed of the silicone rubber described in PTL 2 may show decreased ball-hitting performance, e.g., the amount of rotation and ball speed, in an environment where the rubber sheet is liable to absorb moisture, for example, in a high humidity environment.

At least one aspect of the present disclosure is directed to providing a table tennis rubber sheet that contributes to exhibiting stable ball-hitting performance regardless of ambient environments such as temperature and humidity. Also, at least one aspect of the present disclosure is directed to providing a table tennis racket capable of exhibiting stable ball-hitting performance regardless of ambient environments such as temperature and humidity.

### SOLUTION TO PROBLEM

At least one aspect of the present disclosure is directed to the provision of a table tennis rubber sheet comprising at least an elastic body sheet, wherein

the elastic body sheet comprises a crosslinked silicone rubber as a binder, and
a hydrosilyl group content in the crosslinked silicone rubber is $5.0\times10^{-4}$ mol/g or less.

At least one aspect of the present disclosure is directed to the provision of a table tennis racket, comprising a racket body and a rubber sheet attached to at least one surface of the racket body, wherein

the rubber sheet is the above table tennis rubber sheet.

ADVANTAGEOUS EFFECTS OF INVENTION

According to at least one aspect of the present disclosure, it is possible to provide a table tennis rubber sheet that contributes to exhibiting stable ball-hitting performance regardless of ambient environments such as temperature and humidity. Also, according to at least one aspect of the present disclosure, it is possible to provide a table tennis racket capable of exhibiting stable ball-hitting performance regardless of ambient environments such as temperature and humidity.

BRIEF DESCRIPTION OF DRAWINGS

[Fig. 1] The schematic view of deformation of a table tennis rubber sheet comprising a crosslinked silicone rubber having a high hydrosilyl group content upon hitting a ball.
[Fig. 2] The schematic view of deformation of a table tennis rubber sheet comprising a crosslinked silicone rubber having a low hydrosilyl group content upon hitting a ball.
[Fig. 3] The schematic view of a table tennis rubber sheet.
[Fig. 4] The schematic view of a table tennis rubber sheet having a plurality of protrusions on the side of a sponge sheet.
[Fig. 5] The schematic view of a table tennis rubber sheet having a plurality of protrusions on the side opposite to the sponge sheet.
[Fig. 6] The schematic view for explaining how the crosslinked silicone rubber is degraded.
[Fig. 7] The schematic view of a metal mold for preparing a flat solid rubber sheet.
[Fig. 8] The schematic view of a metal mold for preparing a solid rubber sheet having a plurality of protrusions.
[Fig. 9] The schematic view for explaining the procedure of evaluating the ball-hitting performance.

DESCRIPTION OF EMBODIMENTS

In the present disclosure, the expression of "from XX to YY" or "XX to YY" indicating a numerical range means a numerical range including a lower limit and an upper limit which are end points, unless otherwise specified. When a numerical range is described in a stepwise manner, the upper and lower limits of each numerical range can be arbitrarily combined. In addition, in the present disclosure, for example, descriptions such as "at least one selected from the group consisting of XX, YY and ZZ" mean any of XX, YY, ZZ, the combination of XX and YY, the combination of XX and ZZ, the combination of YY and ZZ, and the combination of XX, YY, and ZZ.

A table tennis rubber sheet according to at least one aspect of the present disclosure has an elastic body sheet comprising a crosslinked silicone rubber as a binder. Moreover, a hydrosilyl group content in the crosslinked silicone rubber is $5.0 \times 10^{-4}$ mol/g or less. The inventors of the present invention found that the table tennis rubber sheet exhibits stable ball-hitting performance regardless of the temperature change, and has excellent ball-hitting performance even in an environment where the table tennis rubber sheet is liable to absorb moisture.

The inventors of the present invention infer as follows as to the reasons why the table tennis rubber sheet has excellent ball-hitting performance even in an environment where the table tennis rubber sheet is liable to absorb moisture. First, Figs. 1A and 1B illustrate the behavior of an elastic body sheet comprising a crosslinked silicone rubber having a hydrosilyl group content of more than $5.0 \times 10^{-4}$ mol/g as a binder when a ball is hit with a table tennis rubber sheet having the elastic body sheet under a high humidity environment.

Fig. 1A shows the crosslinked silicone rubber having a high hydrosilyl group content before hitting a ball. A polysiloxane chain 11 constituting the crosslinked silicone rubber 1 has methyl groups 12 and hydrosilyl groups 13, and the hydrosilyl groups 13 form hydrogen bonds 15 with water molecules 14 in the crosslinked silicone rubber.

And, Fig. 1B shows the crosslinked silicone rubber having a high hydrosilyl group content upon hitting a ball. When the table tennis rubber sheet is deformed by hitting a ball, the relative position of the hydrosilyl groups and the water molecules is displaced, whereby the hydrogen bonds in Fig. 1A before hitting a ball are cleaved and new hydrogen bonds are formed between adjacent hydrosilyl groups and water molecules. Thereafter, when recovering deformation associated with the ball-hitting, hydrogen bonds are cleaved and recombined again, and the crosslinked silicone rubber returns to the state of Fig. 1A.

As described above, it is believed that, in a crosslinked silicone rubber having a high hydrosilyl group content, hydrogen bonds are cleaved and recombined at the time of deformation due to ball-hitting and at the time of recovery from the deformation, leading to a reduction in the deformation recovery rate and resulting in a reduction in ball-hitting

performance.

On the other hand, Figs. 2A and 2B illustrate the behavior of an elastic body sheet comprising a crosslinked silicone rubber having a hydrosilyl group content of less than $5.0 \times 10^{-4}$ mol/g as a binder when a ball is hit with a table tennis rubber sheet having the elastic body sheet under a high humidity environment. Fig. 2A shows the crosslinked silicone rubber having a low hydrosilyl group content before hitting a ball.

While a polysiloxane chain 21 constituting the crosslinked silicone rubber 2 has methyl groups 22, the polysiloxane chain 21 hardly comprises any hydrosilyl groups and thus does not form a hydrogen bond with water molecules 23 in the crosslinked silicone rubber. Because of this, when the state of Fig. 2B is brought about by deformation accompanying hitting a ball, or when returning to the state of Fig. 2A from the state of Fig. 2B by deformation recovery, cleavage and recombination of hydrogen bonds do not occur. As a result, it is believed that the table tennis rubber sheet rapidly recovers from deformation accompanying hitting a ball, providing excellent ball-hitting performance.

Preferred embodiments of a table tennis rubber sheet and a table tennis racket comprising the same will be described in detail below.

The table tennis rubber sheet comprises at least an elastic body sheet. The elastic body sheet comprises a crosslinked silicone rubber as a binder. In the elastic body sheet, the crosslinked silicone rubber can be used as a binder for, for example, a pigment or a porous inorganic filler. By using the crosslinked silicone rubber, stable ball-hitting performance can be exhibited.

Fig. 3 is an example of a cross-sectional view in the thickness direction of the table tennis rubber sheet. The table tennis rubber sheet 3 is a rubber sheet comprising a solid rubber sheet 31 laminated with a sponge sheet 32 as an elastic body sheet. The rubber sheet 3 may be formed only with the solid rubber sheet 31. The elastic body sheet in the table tennis rubber sheet may be a solid rubber sheet 31, may be a sponge sheet 32, or may be both the solid rubber sheet 31 and the sponge sheet 32. The elastic body sheet is preferably a solid rubber sheet 31.

<Solid rubber sheet>

In here, a material that forms the solid rubber sheet 31 as the elastic body sheet and the shape thereof are described. First, the material of the solid rubber sheet 31 is described. The solid rubber sheet 31 as the elastic body sheet comprises a crosslinked silicone rubber in view of being excellent in flexibility and deformation recovery and having less change with temperature and over time.

Examples of the crosslinked silicone rubber include a cured product of an addition-curing type liquid silicone rubber mixture. The addition-curing type liquid silicone rubber mixture comprises, for example, an alkenyl group-containing polyorganosiloxane, a hydrosilyl group-containing polyorganosiloxane and a hydrosilylation catalyst.

The alkenyl group-containing polyorganosiloxane include a compound represented, for example, by the following formula (1).

[C1]

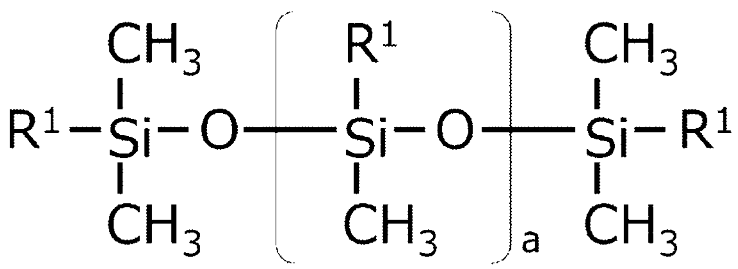

(1)

In formula (1), each $R^1$ independently is a methyl group or an alkenyl group, and at least two $R^1$ groups are alkenyl groups. It is preferably $100 \leq a \leq 2500$. Examples of the alkenyl group include vinyl, allyl, propenyl, isopropenyl, butenyl, isobutenyl, pentenyl and hexenyl groups, and a vinyl group is preferable.

Preferably, $R^1$ groups at both ends are alkenyl groups, and $R^1$ groups other than those at the ends are methyl groups.

Examples of the hydrosilyl group-containing polyorganosiloxane include a compound represented by, for example, the following formula (2).

[C2]

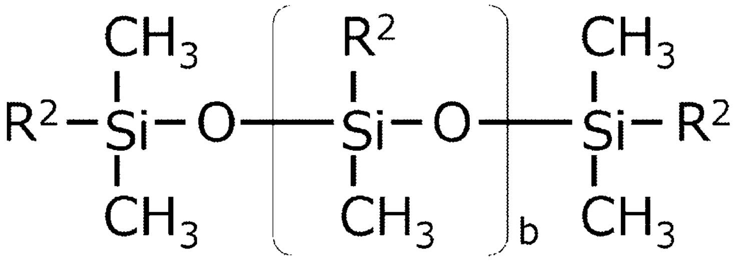

(2)

In formula (2), each $R^2$ independently is a methyl group or a hydrogen atom, and at least two $R_2$ groups are hydrogen atoms. It is preferably 5≤b≤1000.

Preferably, $R^2$ groups at both ends are methyl. The crosslinked silicone rubber has, for example, a hydrosilyl group in the side chain.

The content of the hydrosilyl group-containing polyorganosiloxane in the addition-curing type liquid silicone rubber mixture is preferably an amount such that the amount (molar ratio) of the hydrosilyl group of the hydrosilyl group-containing polyorganosiloxane is 1.1 to 20.0 times, more preferably 2.0 to 10.0 times, relative to the amount of the alkenyl group of the alkenyl group-containing polyorganosiloxane.

Examples of the hydrosilylation catalyst include catalysts based on platinum, palladium and rhodium, and particularly a platinum-based catalyst is preferable. The platinum-based catalyst used may be chloroplatinic acid, an alcohol solution of chloroplatinic acid, a complex of chloroplatinic acid and an olefin, a complex of chloroplatinic acid and a vinyl siloxane and platinum-supported silica.

The content of the hydrosilylation catalyst in the addition-curing type liquid silicone rubber mixture is preferably an amount such that the proportion of the mass of the catalytic metal atom relative to the mass of the alkenyl group-containing polyorganosiloxane is in the range of 1 ppm or more and 100 ppm or less.

Further, it is necessary that the hydrosilyl group content in the crosslinked silicone rubber is $5.0\times10^{-4}$ mol/g or less. As a result, it is inferred that the elastic body sheet quickly undergoes deformation recovery at the time of hitting a ball as described above, and can have excellent ball-hitting performance.

The hydrosilyl group content in the crosslinked silicone rubber is preferably $9.0\times10^{-5}$ mol/g or less, and more preferably $6.0\times10^{-5}$ mol/g or less. The lower limit is preferably low and thus is not particularly limited, but preferably $1.0\times10^{-6}$ mol/g or more, and more preferably $1.0\times10^{-5}$ mol/g or more.

The hydrosilyl group content in the crosslinked silicone rubber is, for example, preferably $1.0\times10^{-6}$ to $5.0\times10^{-4}$ mol/g, more preferably $1.0\times10^{-6}$ to $9.0\times10^{-5}$ mol/g and still more preferably $1.0\times10^{-5}$ to $6.0\times10^{-5}$ mol/g.

The hydrosilyl group content in the crosslinked silicone rubber can be controlled to be low within the above range by properly setting the difference obtained by subtracting the alkenyl group content from the hydrosilyl group content in a non-crosslinked liquid silicone rubber mixture which is the raw material of the crosslinked silicone rubber. Specifically, the difference is, for example, $5.0\times10^{-4}$ mol/g or less, preferably $9.0\times10^{-5}$ mol/g or less, and more preferably $6.0\times10^{-5}$ mol/g or less.

Meanwhile, conventional crosslinked silicone rubbers such as commercially available silicone rubbers comprise an excess amount of hydrosilyl group-containing polyorganosiloxanes in order to reduce the reaction residue of alkenyl group-containing polyorganosiloxanes, and thus it is believed that the hydrosilyl group content is high.

The vinyl group content in the crosslinked silicone rubber is preferably $2.0\times10^{-6}$ mol/g or less. If the vinyl group content is $2.0\times10^{-6}$ mol/g or less, the deformation recovery of the crosslinked silicone rubber can be more sufficiently maintained even in a high humidity environment, and the deformation of the elastic body sheet due to ball-hitting can be more rapidly recovered. The present inventors believe this is because of improved deformation recovery of the crosslinked silicone rubber due to low amount of unreacted alkenyl group-containing polyorganosiloxane that behaves as a viscous component.

The vinyl group content in the crosslinked silicone rubber is more preferably $5.0\times10^{-7}$ mol/g or less, and more preferably $2.0\times10^{-7}$ mol/g or less. The lower limit is preferably low and thus is not particularly limited, but preferably $1.0\times10^{-8}$ mol/g or more, and more preferably $8.0\times10^{-8}$ mol/g or more.

The vinyl group content in the crosslinked silicone rubber is, for example, preferably $1.0\times10^{-8}$ to $2.0\times10^{-6}$ mol/g, $1.0\times10^{-8}$ to $5.0\times10^{-7}$ mol/g, and still more preferably $8.0\times10^{-8}$ to $2.0\times10^{-7}$ mol/g.

The vinyl group content in the crosslinked silicone rubber can be controlled to be low within the above range by properly setting the ratio (molar ratio) of the amounts of alkenyl groups to hydrosilyl groups in a non-crosslinked liquid silicone rubber mixture which is the raw material of the crosslinked silicone rubber. Specifically, the amount of hydrosilyl groups is preferably 1.1 times or more, more preferably 2.0 times or more, relative to the amount of alkenyl groups.

The elastic body sheet comprising the crosslinked silicone rubber as a binder preferably comprises a filler for the purpose of reinforcing. The content of the filler in the elastic body sheet is preferably 1.0 to 15.0% by mass based on the mass of the elastic body sheet. By setting the content to 15.0% by mass or less, inhibition of deformation recovery of the

crosslinked silicone rubber due to excessive filler can be suppressed even in a high humidity environment. Moreover, the content of the filler also be, for example, 0.5 to 20.0% by mass, more preferably 1.0 to 15.0% by mass, and still more preferably 3.0 to 7.0% by mass.

And, examples of the filler include zeolite, carbon black, silica, calcium carbonate, magnesium carbonate, kaolin and talc. The filler is preferably at least one selected from the group consisting of carbon black and silica. Carbon black and silica have a high reinforcing effect on the crosslinked silicone rubber and can further improve ball-hitting performance regardless of the environment.

The number average particle diameter of the primary particles of the filler is preferably 10 to 500 nm.

The content of the filler in the elastic body sheet can be measured by the following procedure.

A sample piece of about 10 mg is collected from the elastic body sheet and weighed on a precision balance. The sample piece is placed on an alumina pan and placed into a thermogravimetric analyzer, and while recording a weight change of the sample piece, the temperature is increased from 20°C to 600°C at a heating rate of 20°C/min in a nitrogen atmosphere, and the temperature is maintained at 600°C for 5 minutes. As a result, all organic substances such as silicone comprised in the sample piece are degraded and evaporated, leaving the filler, and the weight of the filler comprised in the sample piece can be calculated.

The elastic body sheet is preferably a cured product of an addition-curing type liquid silicone rubber mixture comprising the alkenyl group-containing polyorganosiloxane, the hydrosilyl group-containing polyorganosiloxane, the hydrosilylation catalyst, and the filler.

The elastic body sheet may comprise, in addition to the crosslinked silicone rubber as a binder, an additive to an extent that does not impair the effects of the present disclosure. The content of the crosslinked silicone rubber in the elastic body sheet is preferably 80.0 to 99.0% by mass and more preferably 90.0 to 96.0% by mass.

For example, when producing a sponge sheet, a reaction controlling agent for adjusting the curing rate, a pigment for coloring, a plasticizer, a filler, a bulking agent and other various additives may be appropriately added to the addition-curing type liquid silicone rubber mixture as needed.

Next, the shape of the solid rubber sheet 31 is described. The solid rubber sheet 31 is flat and adhered to the sponge sheet 32 as illustrated in Fig. 3. Moreover, the solid rubber sheet may have a plurality of protrusions. In this case, as shown in Fig. 4, the solid rubber sheet 41 of the table tennis rubber sheet 4 has a plurality of protrusions 43, and the top portions of the protrusions 43 are adhered to the sponge sheet 42. Further, as illustrated in Fig. 5, in the table tennis rubber sheet 5, the solid rubber 51 having a plurality of protrusions 53 may be adhered to the sponge sheet 52 on the surface thereof opposite to the protrusions 53.

<Evaluation of hydrosilyl group content and vinyl group content in crosslinked silicone rubber>

The crosslinked silicone rubber may be reacted with trimethyl orthoformate and methanol in the presence of sulfuric acid, thereby cleaving molecular chains of the crosslinked silicone rubber and degrading the same into methoxysilane units. In this reaction, the siloxane bonds in the silicone rubber are cleaved as shown in Reaction Formula 1 below.

[C3]

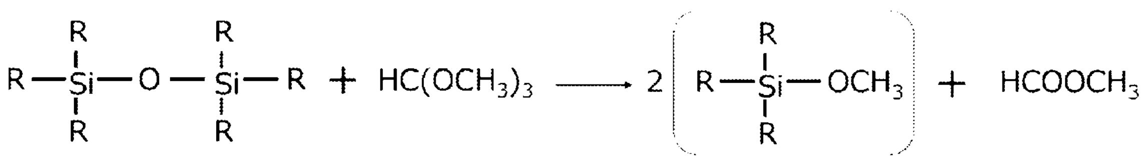

Reaction Formula 1

In the formula, R is an arbitrary substituent.

When the crosslinked silicone rubber comprises a hydrosilyl group, the reaction in which the hydrogen atom of the hydrosilyl group is replaced by a methoxy group also proceeds simultaneously as shown in Reaction Formula 2 below.

[C4]

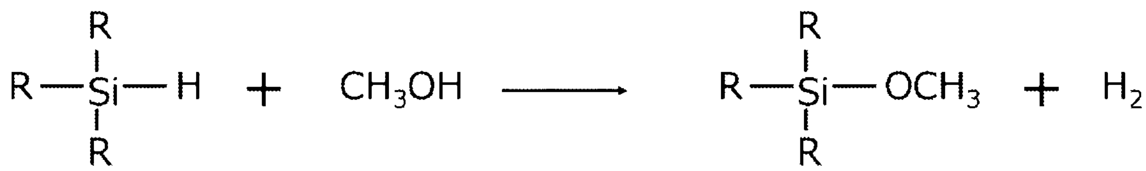

Reaction Formula 2

In the formula, R is an arbitrary substituent.

The degradation of the crosslinked silicone rubber into methoxy silane units by the reactions is described by way of example with a crosslinked silicone rubber having a partial structure as shown in Fig. 6. In Fig. 6, the siloxane bonds in the crosslinked silicone rubber are cleaved at position 61 by the reaction shown in Reaction Formula 1 and the hydrosilyl groups 62 are replaced by methoxy groups by the reaction shown in Reaction Formula 2, resulting in degradation into the methoxysilane units shown in formulae (3) to (7) below.

[C5]

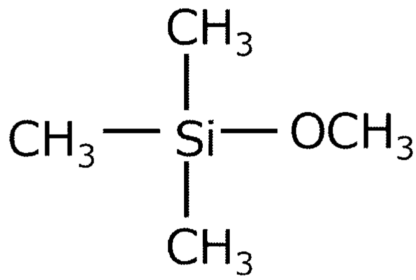

(3)

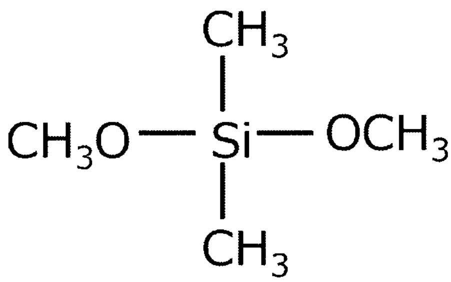

(4)

[C6]

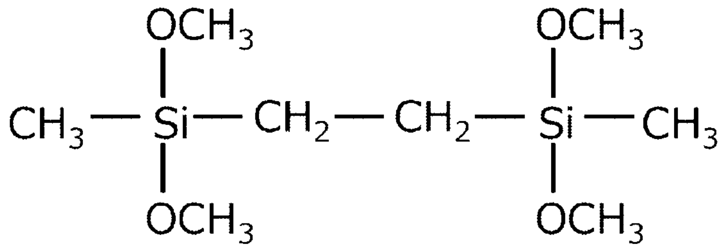

(5)

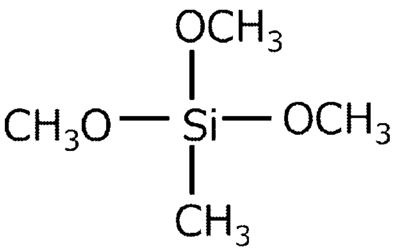

(6)

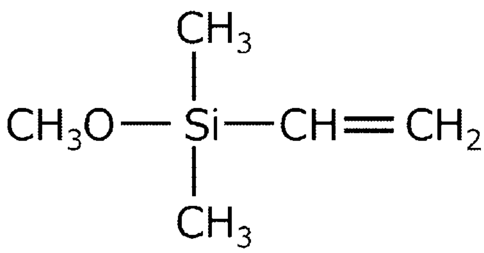

(7)

Among these methoxysilane units, the unit represented by formula (6) is a unit derived from a hydrosilyl group comprised in the crosslinked silicone rubber, and the unit represented by formula (7) is a unit derived from a vinyl group comprised in the crosslinked silicone rubber. In the crosslinked silicone rubber, the terminal hydrosilyl groups in liquid silicone may generally preferentially react. Therefore, the hydrosilyl group of the crosslinked silicone rubber can be quantified by detecting formula (6).

By analyzing the mixture of the methoxysilane units obtained by the degradation by GC/MS, respective methoxysilane units are detected as different peaks on a chromatogram. By determining the peak areas thereof, the hydrosilyl group content and the vinyl group content in the crosslinked silicone rubber can be determined. Specific procedures are described hereinafter.

<Method of forming solid rubber sheet>

Any method for forming the solid rubber sheet may be used without particular limitation, and examples thereof include a metal molding using a hot press. In this molding method, molding is performed using a metal mold 7 including two parts, a lower mold 71 and an upper mold 72 as illustrated in Fig. 7. At the time of molding, a necessary amount of material is placed on the lower mold 71, the upper mold 72 is overlaid thereon, and the mold is sufficiently heated and pressed on a hot press to form the solid rubber sheet.

Moreover, when protrusions are formed on the solid rubber sheet, a plurality of recesses 83 may be provided in a lower mold 81 of a metal mold 8 as illustrated in Fig. 8. The shape of protrusion of the solid rubber sheet is specified in the "THE ITTF QUALITY PROGRAMME FOR RACKET COVERINGS - MANUAL" issued by the International Table Tennis Federation, and the shape and arrangement of the recesses 83 are preferably decided so that the shape of the protrusion formed are in conformity to this specification.

The thickness of the solid rubber sheet is also preferably in conformity to the above-described specification, for example, the thickness of the elastic body sheet is preferably 0.3 to 2.0 mm and more preferably 1.0 to 2.0 mm. When protrusions are formed on the sheet, said thickness is the thickness including the protrusions. The total thickness of the table tennis rubber sheet is preferably 4.0 mm or less.

<Sponge sheet>

The table tennis rubber sheet may include a sponge sheet laminated with the solid rubber sheet. Any known

materials may be used for forming the sponge sheet without limitation. Examples include natural rubbers, isoprene rubbers, butadiene rubbers, chloroprene rubbers, butyl rubbers, urethane rubbers and silicone rubbers. In view of excellent flexibility and deformation recovery, and less change with temperature and over time, the material is preferably a silicone rubber. Examples of the silicone rubber include a cured product obtained by foaming an addition-curing type liquid silicone rubber mixture. The thickness of the sponge sheet may be within a known range without particular limitation. For example, the thickness is preferably within the range in conformity to the specification of the International Table Tennis Federation.

<Adhesion of solid rubber sheet and sponge sheet>

Any method for adhering the sponge sheet with the solid rubber sheet may be used without particular limitation, and examples thereof include a method such as applying an adhesive such as a modified silicone adhesive or a cyanoacrylate adhesive and bonding. Among others, a silicone adhesive is preferable because cohesive failure hardly occurs in the adhesive layer when hitting a ball due to an appropriate elasticity of the adhesive layer. Thus, the sponge sheet is preferably adhered to the solid rubber sheet with an adhesive, and more preferably with a silicone adhesive.

<Table tennis racket>

At least one aspect of the present disclosure relates to a table tennis racket. The table tennis racket includes a racket body and a rubber sheet attached to at least one surface of the racket body, wherein the rubber sheet is the table tennis rubber sheet described hereinabove.

The table tennis rubber sheet may comprise an elastic body sheet, and the elastic body sheet may be a solid rubber sheet. The table tennis rubber sheet may comprise a solid rubber sheet and a sponge sheet which are the elastic body sheet, and the sponge sheet may be attached to the surface of the racket body on the surface of the sponge sheet opposite to the surface facing the solid rubber sheet.

The table tennis rubber sheets may be attached to both sides of the racket body. Any known method for adhering the table tennis rubber sheet to the racket body may be used without particular limitation. For example, a known adhesive for table tennis rackets may be used. Moreover, any known shape of the racket body may be used without particular limitation.

Examples

Some aspects of the present invention are described in more detail below with reference to specific examples of the table tennis rubber sheet and the table tennis racket.

(Example 1)

[Formation of solid rubber sheet]

A vinyl group-containing polyorganosiloxane "DMS-V42 (manufactured by Gelest Inc.)" (200.0 g), 0.1 g of platinum catalyst "3% Pt-VTS-VTS solution (manufactured by N.E. Chemcat Corporation)", 0.1 g of reaction controlling agent "1-ethynyl-1-cyclohexanol (manufactured by Tokyo Chemical Industry Co., Ltd.)" and 10.7 g of carbon black "Denka Black powder (manufactured by Denka Co., Ltd.)" were weighed and thoroughly stirred in a revolution and rotation mixer "AR-250 (manufactured by Thinky Corporation)", thereby obtaining a homogeneous mixture.

To the resulting mixture was added 1.1 g of a hydrosilyl group-containing polyorganosiloxane "HMS-992 (manufactured by Gelest Inc.)" and again thoroughly stirred on the revolution and rotation mixer to give a homogeneous mixture. The formulation is shown in Table 1.

Next, a required amount of said mixture was placed on a lower mold 71 of the metal mold illustrated in Fig. 7, the upper mold 72 was overlaid, and the metal mold was pressed for 10 minutes with an applied load of 10 MPa on a hot press (manufactured by Kansai Roll Co., Ltd.) of which hot plates were heated to 120°C. Then, the mold was removed and cooled to room temperature, and the upper and lower molds were separated to remove the cured solid rubber sheet. The solid rubber sheet had a thickness of 1.8 mm.

[Hydrosilyl group content and vinyl group content in solid rubber sheet]

500 mg was cut out from the solid rubber sheet as a sample piece, then cut into 5 mm square and placed into a flask, and after adding 245 mg of sulfuric acid, it was heated at 60°C for 1 hour. Then, a mixture of 27.4 g of trimethyl orthoformate and 8.4 g of methanol was added to the flask, refluxed at 170°C for 8 hours and reacted to give a degradation

product of the crosslinked silicone rubber forming the solid rubber sheet.

This degradation product was suction filtered to remove the filler and the resulting filtrate was analyzed by GC/MS to determine the hydrosilyl group content and vinyl group content in the crosslinked silicone rubber. Details of the GC/MS analysis are as follows:

- Apparatus: GCMS QP2020 (manufactured by Shimadzu Corporation)
- Sample injection: 1 μL
- Injection temperature: 300°C
- Split ratio: 1/50
- Carrier gas: Helium
- Carrier gas flow rate: 1.3 mL/min
- Column: Capillary column SH-1
- Column temperature: 40°C for 1 minute, then the temperature was increased at 7°C/min and maintained at 299°C for 1 minute

In the chromatogram obtained by the GC/MS analysis, detected were peaks of five components of formulae (3), (4), (6), (7) and (8) below which were degradation products of the crosslinked silicone rubber.

[C7]

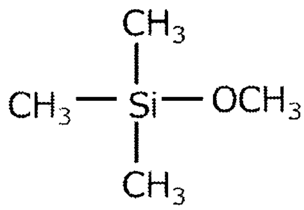

(3)

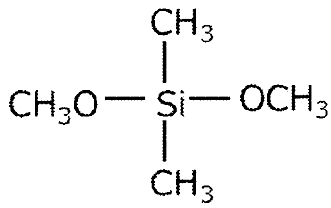

(4)

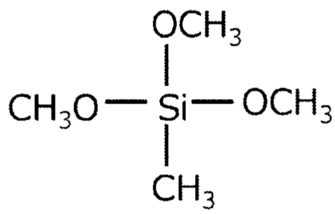

(6)

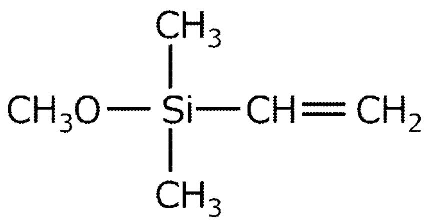

(7)

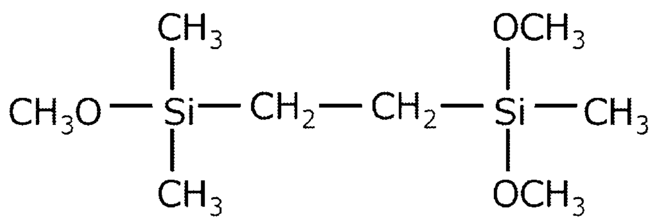

(8)

The weight ratios of the respective components were determined as follows from the area ratios of the peaks:

$$(3):(4):(6):(7):(8)$$

$$=5.8\times10^{-4}:1.6:7.2\times10^{-3}:5.9\times10^{-3}:1.2\times10^{-5}$$

The each components (3), (4), (6), (7) and (8) are derived from partial structures of formulae (3'), (4'), (6'), (7') and (8') below in the crosslinked silicone rubber before degradation.

[C8]

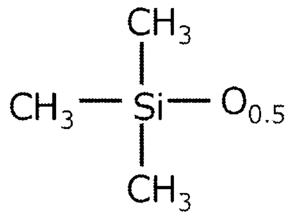

(3')

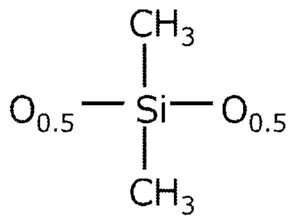

(4')

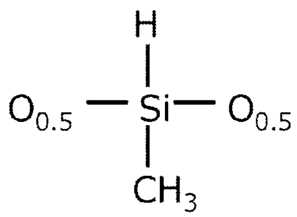

(6')

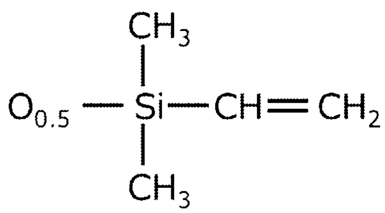

(7')

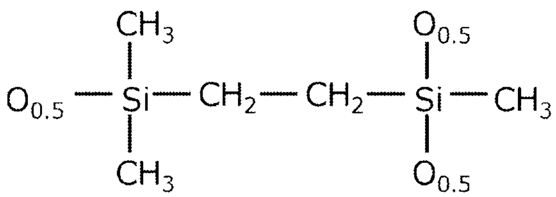

(8')

From the molecular weights of the components (3), (4), (6), (7) and (8), and the partial structures (3'), (4'), (6'), (7') and (8'), the weight ratios of the partial structures (3'), (4'), (6'), (7') and (8') in the crosslinked silicone rubber before degradation are calculated as follows:

$$(3'):(4'):(6'):(7'):(8')$$

$$=4.5\times10^{-4}:9.9\times10^{-1}:3.2\times10^{-3}:4.1\times10^{-3}:9.7\times10^{-6}$$

From the weight ratios, the content in weight of the hydrosilyl group-containing partial structure (6') is calculated to be $3.2\times10^{-3}$ g per 1 g of the crosslinked silicone rubber. Since the molecular weight of the partial structure (6') is 60, the hydrosilyl group content is $5.3\times10^{-5}$ mol/g.

[Filler content]

The filler content of the crosslinked silicone rubber forming the solid rubber sheet was measured by thermogravimetric analysis according to the following procedure. A sample piece of 10 mg was cut out from the solid rubber sheet. The sample piece was cut into about 1 mm square pieces, placed on an alumina pan and weighed on a precision balance, and this weight was designated as "pre-heating weight". The sample was placed in a thermogravimetric analyzer "TGA/DSC3+ (manufactured by Mettler Toledo)". Under a nitrogen atmosphere, the temperature was increased from 20°C to 600°C at a rate of 20°C/min and maintained at 600°C for 5 minutes to degrade and evaporate organic matter comprised in the sample, thereby obtaining a residue consisting of the filler. The weight of the residue was measured and designated as "post-heating weight". The filler content was calculated from the following Equation 1 with the values of the "pre-heating weight" and the "post-heating weight".

"Filler content [mass%]"=("Post-heating weight [mg]"/"Pre-heating weight [mg]")×100 (Equation 1):

[Bonding of solid rubber sheet to table tennis racket]

An adhesive for table tennis rackets "Finezip (manufactured by Nippon Takkyu Co., Ltd.)" was thinly applied to the solid rubber sheet and the blade of a table tennis racket "Korbel (manufactured by Tamasu Co., Ltd.)". After drying at room temperature for about 30 minutes, the surfaces of the solid rubber sheet and the blade to which the adhesive was applied were bonded together and left to stand overnight at room temperature to allow sufficient adhesion. After the adhesion, the parts of the solid rubber sheet protruding from the blade of the racket were cut off with scissors to obtain a table tennis racket 1.

[Evaluation of ball-hitting performance at room temperature]

Ball-hitting performance at room temperature was evaluated at a temperature of 23°C and a relative humidity of 55%. The procedure is described with reference to Fig. 9. A table tennis racket 92 was bonded to a metal plate 91 and the metal plate 91 was fixed to a horizontal table 93 at an angle of 45° relative to the horizontal table 93. Further, a ball ejection port 94 of a table tennis robot "Y-M-07 (manufactured by Yasaka Co., Ltd.)" was arranged at a position where the distance from the center of the table tennis racket was 13 cm.

From the ball ejection port 94, a ball 95 without rotation was horizontally ejected at a ball speed of 8.6 m/sec towards the center of the table tennis racket 92, and rebounding of the ball 95 after hitting the table tennis racket 92 was filmed with a highspeed microscope "VW-900 (manufactured by Keyence Corporation)" under conditions of a shutter speed of 1/8000 sec and a frame rate of 4000 fps.

From the obtained images, the rotation angle was determined on the basis the angle at which the ball 95 rotated during 32 frames (elapsed time: 0.008 seconds) after the ball 95 hit the table tennis racket 92, and the ball-hitting performance was rated on the basis of the following indices. The table tennis racket 1 of Example 1 was rated as rank A.

Rank A: The rotation angle was 56.0 or more, and extremely excellent control performance was exhibited
Rank B: The rotation angle was 54.0 or more and less than 56.0, and excellent control performance was exhibited
Rank C: The rotation angle was 51.0 or more and less than 54.0, and more than sufficient control performance was exhibited
Rank D: The rotation angle was 49.0 or more and less than 51.0, and sufficient control performance was exhibited
Rank E: The rotation angle was less than 49.0 and sufficient control performance could not be exhibited

[Evaluation of ball-hitting performance under high temperature and high humidity]

The evaluation was carried out in an environment of a temperature of 30°C and a relative humidity of 80% in the same manner as in the evaluation of ball-hitting performance at room temperature. The table tennis racket 1 of Example 1 was rated as rank A.

(Examples 2 to 12)

Solid rubber sheets 2 to 12 were prepared in the same manner as in example 1 except that the materials used for the solid rubber sheets were changed as indicated in Tables 1 and 2 below. Table tennis rackets 2 to 12 were then prepared for the obtained solid rubber sheets 2 to 12 in the same procedure as in Example 1. Further, the obtained table tennis rackets 2 to 12 were subjected to the evaluations of ball-hitting performance at room temperature and under high temperature and high humidity in the same manner as in Example 1. The results are shown in Tables 3 and 4.

[Table 1]

| Solid rubber sheet No. | | Example 1 1 | Example 2 2 | Example 3 3 | Example 4 4 | Example 5 5 | Example 6 6 | Example 7 7 | Example 8 8 |
|---|---|---|---|---|---|---|---|---|---|
| Vinyl group- containing polyorganosiloxane | DMS-V42 (manufactured by Gelest Inc.) | 200.0g | 200.0g | 200.0g | 200.0g | 200.0g | 200.0g | 200.0g | 200.0g |
| Hydrosilyl group-containing polyorganosiloxane | HMS-992 (manufactured by Gelest Inc.) | 1.1g | 1.1g | 7.5g | 0.4g | 7.5g | 7.5g | 7.5g | 7.5g |
| Platinum catalyst | 3% Pt-VTS-VTS solution (manufactured by N.E. Chemcat Corp.) | 0.1g | 0.1g | 0.1g | 0.1g | 0.1g | 0.1g | 0.1g | 0.1g |
| Reaction controlling agent | 1-Ethynyl-1-cyclohexanol (manufactured by Tokyo Chemical Industry Co.. Ltd.) | 0.1g | 0.1g | 0.1g | 0.1g | 0.1g | 0.1g | 0.1g | 0.1g |
| Filler | Denka Black powder (manufactured by Denka Co., Ltd.) | 10.7g | - | 10.7g | 10.7g | 23.0g | 36.8g | - | - |
| | AEROSIL R976S (manufactured by Nippon Aerosil Co., Ltd.) | - | 10.7g | - | - | - | - | - | - |
| | Calcium carbonate Hakuenka U (manufactured by Shiraishi Kogyo Kaisha. Ltd.) | - | - | - | - | - | - | 23.0g | - |
| | Magnesium carbonate Goldstar (manufactured by Konoshima Chemical Co., Ltd.) | - | - | - | - | - | - | - | 23.0g |
| | Kaolin clay RC-1 (manufactured by Takehara Kagaku Kogyo Co., Ltd.) | - | - | - | - | - | - | - | - |
| Crosslinked silicone rubber presence or absence | | Presence | Presence | Presence | Presence | Presence | Presence | Presence | Presence |
| Hydrosilyl group content [mol/g] | | 5.3E-5 | 5.2E-5 | 5.0E-4 | 4.9E-5 | 4.7E-4 | 4.5E-4 | 4.8E-4 | 4.7E-4 |
| Vinyl group content [mol/g] | | 1.0E-7 | 1.1E-7 | 1.1E-7 | 2.0E-6 | 1.0E-7 | 1.1E-7 | 1.0E-7 | 1.0E-7 |
| Filler content [mass%] | | 5.1 | 5.0 | 5.1 | 5.1 | 9.9 | 15.0 | 9.7 | 9.8 |

In the Table, for example, the description of "5.3E-5", indicates "$5.3\times10^{-5}$".

[Table 2]

| | | Example 9 | Example 10 | Example 11 | Example 12 | Comparative Example 1 | Comparative Example 2 | Comparative Example 3 |
|---|---|---|---|---|---|---|---|---|
| Solid rubber sheet No. | | 9 | 10 | 11 | 12 | 13 | 14 | 15 |
| Vinyl group-containing polyorganosiloxane | DMS-V42 (manufactured by Gelest Inc.) | 200.0g | 200.0g | 200.0g | 200.0g | - | - | - |
| Hydrosilyl group-containing polyorganosiloxane | HMS-992 (manufactured by Gelest Inc.) | 7.5g | 7.5g | 7.5g | 0.3g | - | - | - |
| Platinum catalyst | 3% Pt-VTS-VTS solution (manufactured by N.E. Chemcat Corp.) | 0.1g | 0.1g | 0.1g | 0.1g | - | - | - |
| Reaction controlling agent | 1-Ethynyl-1-cyclohexanol (manufactured by Tokyo Chemical Industry Co., Ltd.) | 01g | 0.1g | 0.1g | 0.1g | - | - | - |
| Filler | Denka Black powder (manufactured by Denka Co., Ltd.) | - | - | - | - | - | - | - |
| | AEROSIL R976S (manufactured by Nippon Aerosil Co., Ltd.) | - | - | - | - | - | - | - |
| | Calcium carbonate Hakuenka U (manufactured by Shiraishi Kogyo Kaisha, Ltd.) | - | 36.8g | 39.8g | 39.8g | - | - | - |
| | Magnesium carbonate Goldstar (manufactured by Konoshima Chemical Co., Ltd). | - | - | - | - | - | - | - |
| | Kaolin clay RC-1 (manufactured by Takehara Kagaku Kogyo Co., Ltd.) | 23.0g | - | - | - | - | - | - |
| Crosslinked silicone rubber presence or absence | | Presence | Presence | Presence | Presence | Absence | Absence | Presence |
| Hydrosilyl group content [mol/g] | | 4.8E-4 | 4.6E-4 | 4.4E-4 | 5.5E-5 | Not measured | Not measured | 5.3E-4 |
| Vinyl group content [mol/g] | | 1.0E-7 | 1.1E-7 | 1.0E-7 | 3.0E-6 | Not measured | Not measured | 2.1E-7 |
| Filler content [mass%] | | 9.6 | 14.7 | 16.1 | 16.0 | Not measured | Not measured | 17.5 |

[Table 3]

| | | Example 1 | Example 2 | Example 3 | Example 4 | Example 5 | Example 6 | Example 7 | Example 8 |
|---|---|---|---|---|---|---|---|---|---|
| Table tennis racket No. | | Table tennis racket 1 | Table tennis racket 2 | Table tennis racket 3 | Table tennis racket 4 | Table tennis racket 5 | Table tennis racket 6 | Table tennis racket 7 | Table tennis racket 8 |
| Evaluation of ball-hitting performance at temperature 23°C and humidity 55% | Rotation angle [rps] | 58.3 | 58.1 | 56.5 | 51.4 | 55.2 | 52.1 | 52.9 | 53.3 |
| | Ball-hitting evaluation rank | A | A | A | C | B | C | C | C |
| Evaluation of ball-hitting performance at temperature 30°C and humidity 80% | Rotation angle [rps] | 58.1 | 58.0 | 55.5 | 50.9 | 54.4 | 50.7 | 52.2 | 52.3 |
| | Ball-hitting evaluation rank | A | A | B | D | B | D | C | C |

[Table 4]

| | | Example 9 | Example 10 | Example 11 | Example 12 | Comparative Example 1 | Comparative Example 2 | Comparative Example 3 |
|---|---|---|---|---|---|---|---|---|
| Table tennis racket No. | | Table tennis racket 9 | Table tennis racket 10 | Table tennis racket 11 | Table tennis racket 12 | Table tennis racket 13 | Table tennis racket 14 | Table tennis racket 15 |
| Evaluation of ball-hitting performance at temperature 23°C and humidity 55% | Rotation angle [rps] | 53.2 | 52.1 | 51.5 | 50.8 | 55.2 | 55.0 | 50.7 |
| | Ball-hitting evaluation rank | C | C | C | D | B | B | D |
| Evaluation of ball-hitting performance at temperature 30°C and humidity 80% | Rotation angle [rps] | 52.2 | 51.5 | 50.4 | 49.2 | 40.0 | 40.0 | 42.8 |
| | Ball-hitting evaluation rank | C | C | D | D | E | E | E |

(Comparative Example 1)

100 parts by mass of natural rubber "SVR-CV100", 50 parts by mass of a plasticizer "Pastell 2H-12 (manufactured by Lion Specialty Chemicals Co., Ltd.)", 30 parts by mass of magnesium carbonate "Goldstar (manufactured by Konoshima Chemical Co., Ltd.)", 3 parts by mass of active zinc oxide "AZO (manufactured by Seido Chemical Industry Co., Ltd.)" and 3.5 parts by mass of zinc oxide "II (manufactured by Seido Chemical Industry Co., Ltd.)"were mixed, kneaded in a 7-L kneader mixer at 60°C for 30 minutes to obtain kneading product without a crosslinking agent.

To the crosslinking agent-free kneading product were then added 6.5 parts by mass of sulfur "sulfur fine powder #200 (manufactured by Hosoi Chemical Industry Co., Ltd.)", 1.3 parts by mass of a sulfenamide vulcanization accelerator "Nocceler CZ (manufactured by Ouchi Shinko Chemical Industrial Co., Ltd.)", 0.75 parts by mass of a guanidine vulcanization accelerator "Nocceler D (manufactured by Ouchi Shinko Chemical Industrial Co., Ltd.)", 0.5 parts by mass of a thiuram vulcanization accelerator "Nocceler TRA (manufactured by Ouchi Shinko Chemical Industrial Co., Ltd.)", and 2 parts by mass of a vulcanization activator "Nocmaster EGS (manufactured by Ouchi Shinko Chemical Industrial Co., Ltd.)", the mixture was kneaded with an 8-inch mixing roll for 10 minutes at a temperature of 60°C to obtain a kneading product for solid rubber sheet preparation.

The obtained kneading product for solid rubber sheet preparation was subjected to the same procedure as in Example 1 except that the heating temperature of the metal mold was changed to 160°C to prepare a solid rubber sheet 13. Then, the solid rubber sheet 13 was bonded to the blade of a table tennis racket "Korbel (manufactured by Tamasu Co., Ltd.)" in the same manner as in Example 1 to prepare a table tennis racket 13, which was then subjected to the evaluations of ball-hitting performance at room temperature and under high temperature and high humidity.

(Comparative Example 2)

A table tennis racket 14 was prepared in the same manner as in Comparative Example 1 except that 85 parts by mass of a natural rubber "SVR-CV100" and 15 parts by mass of a polybutadiene thermoplastic elastomer "RB810 (manufactured by JSR Corporation)" were added rather than 100 parts by mass of "SVR-CV100" in Comparative Example 1, and the racket was then subjected to the evaluations of ball-hitting performance at room temperature and under high temperature and high humidity.

(Comparative Example 3)

Liquid A and liquid B of a silicone rubber "KE-521 (manufactured by Shin-Etsu Chemical Co., Ltd.)" were each weighed at 100.0 g, and thoroughly stirred in a revolution and rotation mixer "AR-250 (manufactured by Thinky Corporation)" to give a homogeneous mixture. On the lower mold 71 illustrated in Fig. 7, the above mixture was placed in a volume that was 100% or more relative to the volume of the cavity of the metal mold 7, the upper mold 72 was overlaid, and the metal mold was pressed for 10 minutes with an applied load of 10 MPa on a hot press (manufactured by Kansai Roll Co., Ltd.) of which hot plates were heated to 120°C.

Then, the mold was removed and cooled to room temperature, and the upper and lower molds were separated to remove the cured solid rubber sheet 15. The solid rubber sheet 15 was then bonded to the blade of a table tennis racket "Korbel (manufactured by Tamasu Co., Ltd.)" in the same manner as in Example 1 to prepare a table tennis racket 15, which was then subjected to the evaluations of ball-hitting performance at room temperature and under high temperature and high humidity.

Tables 3 and 4 indicate the results obtained by subjecting the table tennis rackets according to Examples 1 to 12 and Comparative Examples 1 to 3 to the same evaluations to example 1.

Examples 1 to 12 had rank A to D evaluations for the evaluation of ball-hitting performance. It was believed that this was due to rapid deformation recovery of the elastic body sheets deformed by hitting the ball because the crosslinked silicone rubbers forming the elastic body sheets had a hydrosilyl group content of $5.0\times10^{-4}$ mol/g or less.

Moreover, the evaluation was better when the vinyl group content of the crosslinked silicone rubbers was $2.0\times10^{-6}$ mol/g or less. It was believed that this was due to more rapid recovery from the deformation of the elastic body sheet by hitting the ball.

Moreover, the evaluation was better when the filler content of the elastic body sheets was 1.0 to 15.0% by mass. It was believed that this was due to suppression of inhibition of the deformation recovery of the crosslinked silicone rubbers because of excess filler. Further, when the filler was carbon black or silica, the reinforcing effect of the crosslinked silicone rubber was high and excellent ball-hitting performance was exhibited. When all the above conditions were met, ball-hitting performance was further excellent.

Comparative Examples 1 and 2 had rank E evaluation for the evaluation of ball-hitting performance under high temperature and high humidity. It was believed that this was due to lack of a silicone rubber in the elastic body sheets and thus rapid deformation recovery of the elastic body sheets after hitting a ball did not occur.

Comparative Example 3 had rank E evaluation for the evaluation of ball-hitting performance under high temperature and high humidity. It was believed that this was due to lack of rapid deformation recovery of the elastic body sheet deformed by hitting a ball because the crosslinked silicone rubber had a hydrosilyl group content of greater than $5.0\times10^{-4}$ mol/g.

The present invention is not limited to the above embodiments, and various changes and modifications can be made without departing from the spirit and scope of the present invention. Therefore, the following claims are attached in order to publicize the scope of the present invention.

This application claims the benefit of Japanese Patent Application No. 2022-211916, filed December 28, 2022, which is hereby incorporated by reference herein in its entirety.

## Claims

1. A table tennis rubber sheet comprising at least an elastic body sheet, wherein

   the elastic body sheet comprises a crosslinked silicone rubber as a binder, and
   a hydrosilyl group content in the crosslinked silicone rubber is $5.0\times10^{-4}$ mol/g or less.

2. The table tennis rubber sheet according to claim 1, wherein a vinyl group content in the crosslinked silicone rubber is $2.0\times10^{-6}$ mol/g or less.

3. The table tennis rubber sheet according to claim 1 or 2, wherein

   the elastic body sheet comprises a filler, and
   a content of the filler in the elastic body sheet is 1.0 to 15.0% by mass based on a mass of the elastic body sheet.

4. The table tennis rubber sheet according to claim 3, wherein the filler is at least one selected from the group consisting of carbon black and silica.

5. The table tennis rubber sheet according to any one of claims 1 to 4, wherein the crosslinked silicone rubber is a cured product of an addition-curing type liquid silicone rubber mixture.

6. The table tennis rubber sheet according to claim 5, wherein the addition-curing type liquid silicone rubber mixture comprises an alkenyl group-containing polyorganosiloxane, a hydrosilyl group-containing polyorganosiloxane, and a hydrosilylation catalyst.

7. The table tennis rubber sheet according to any one of claims 1 to 6, wherein the elastic body sheet is a solid rubber sheet.

8. A table tennis racket, comprising a racket body and a rubber sheet attached to at least one surface of the racket body, wherein
   the rubber sheet is the table tennis rubber sheet according to any one of claims 1 to 7.

FIG.1A FIG.1B

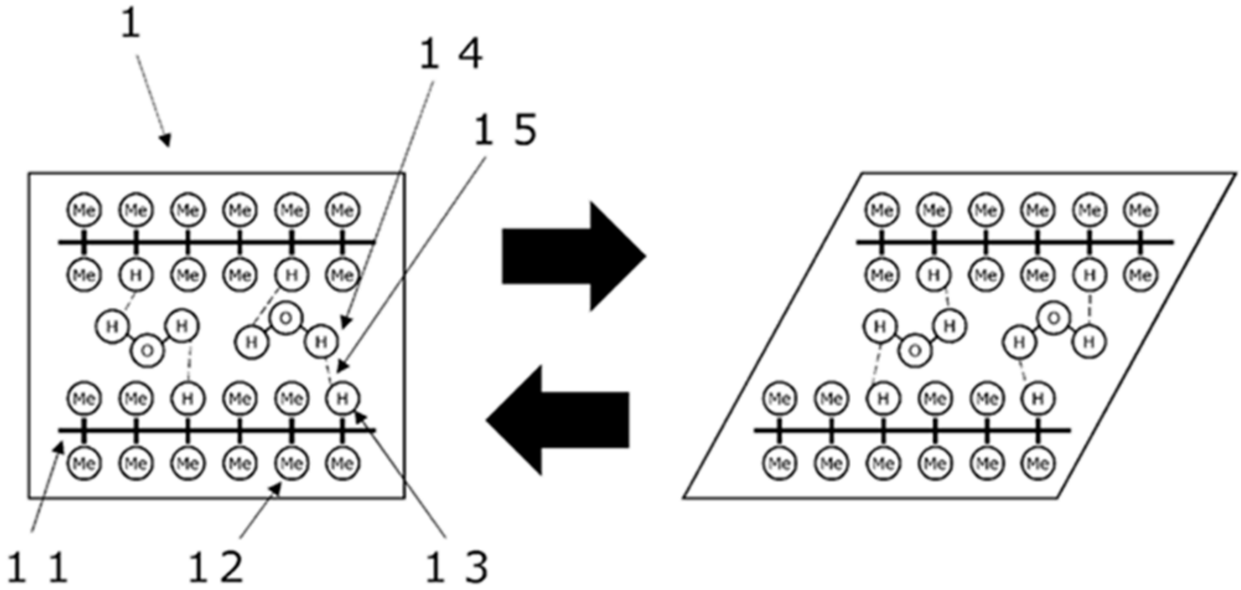

FIG.2A FIG.2B

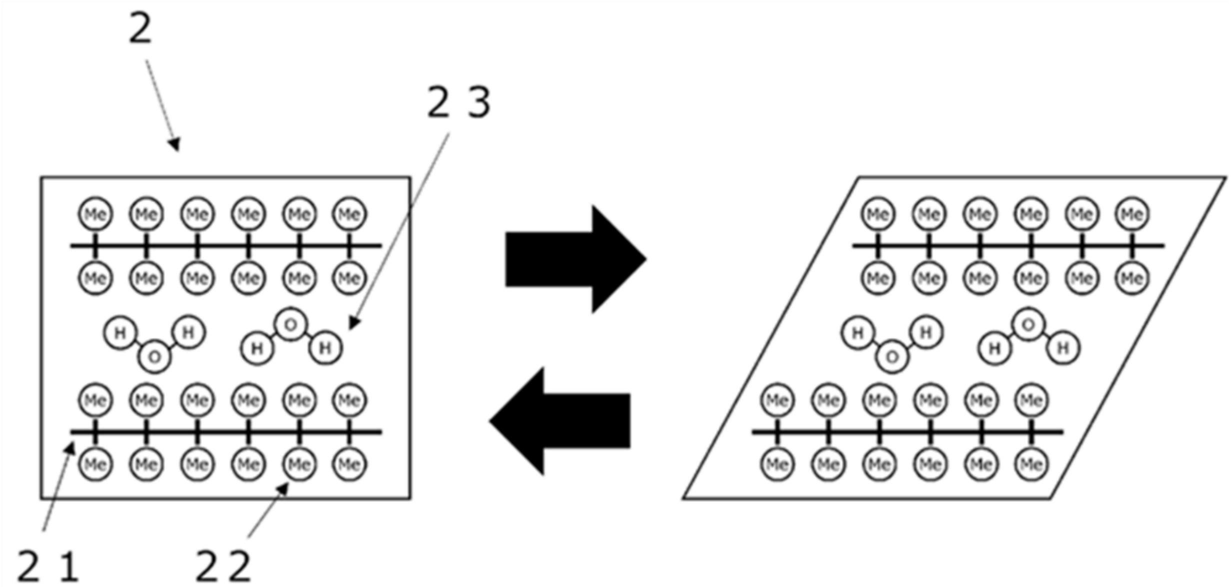

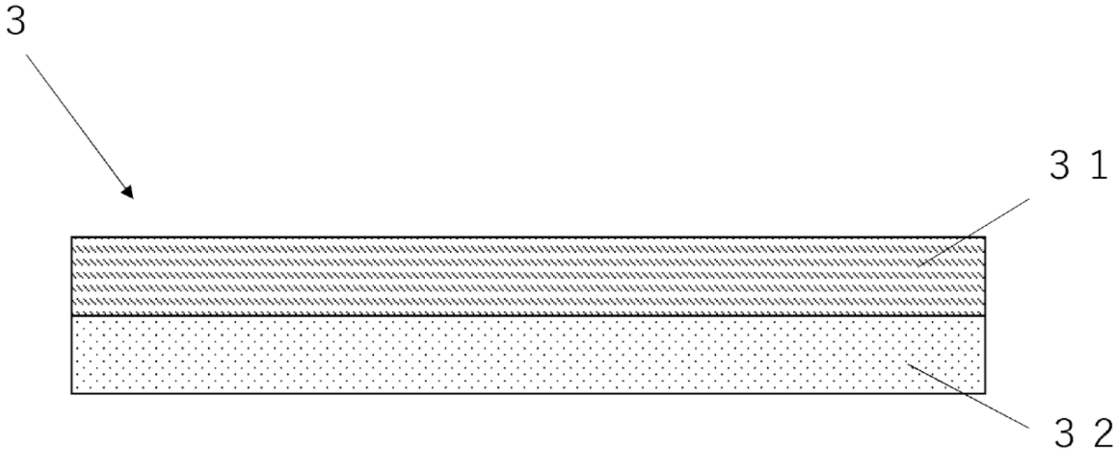


FIG. 3

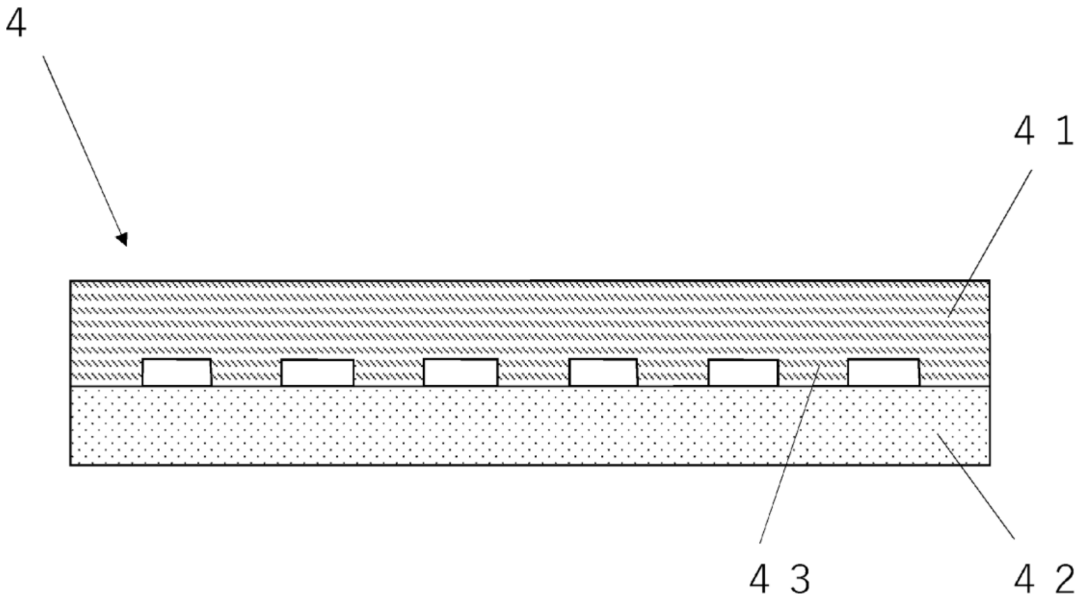


FIG. 4

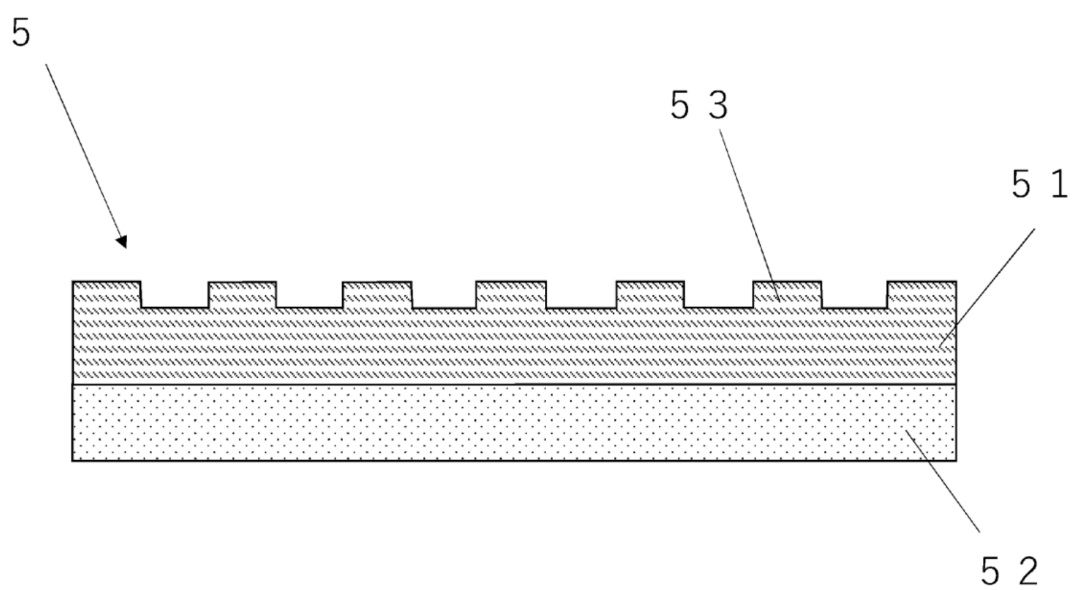


FIG. 5

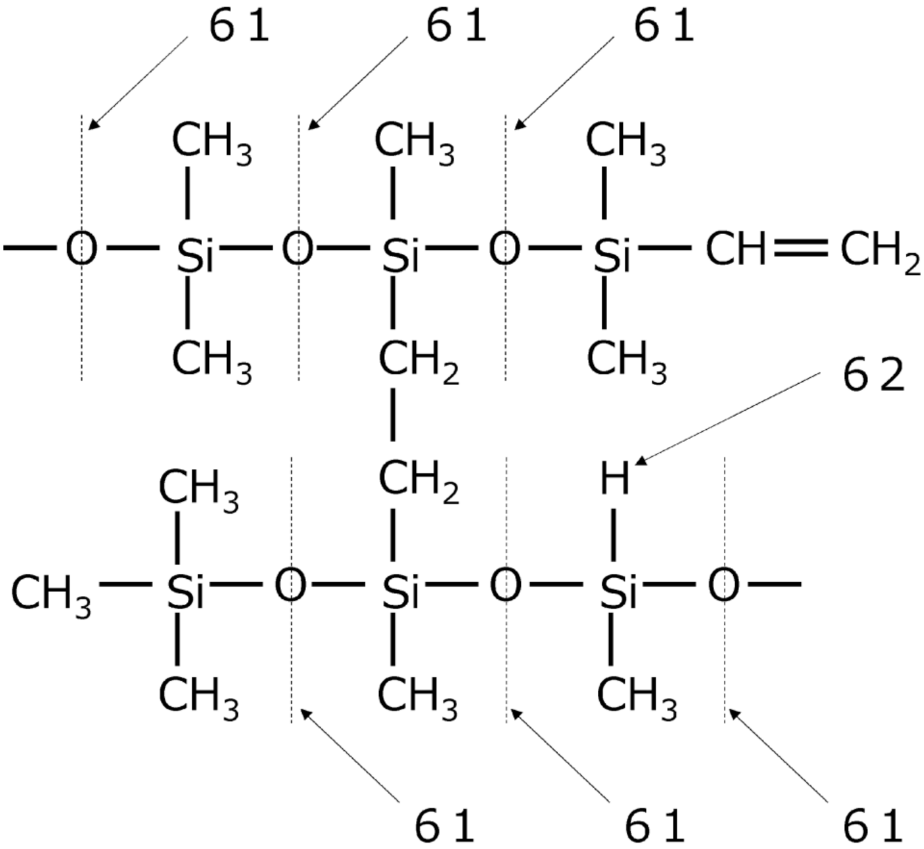

FIG. 6

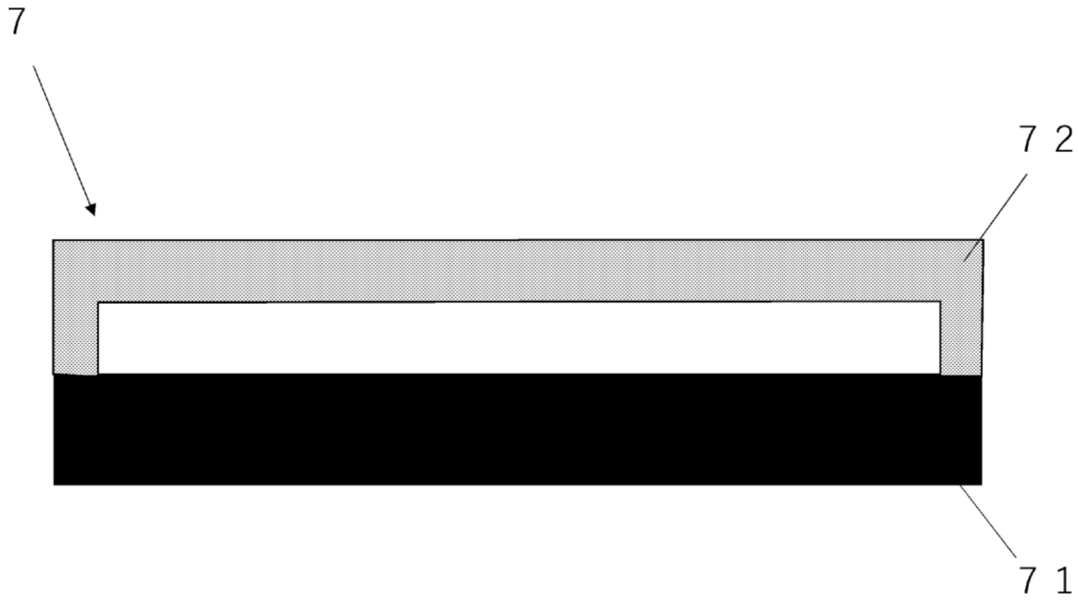


FIG. 7

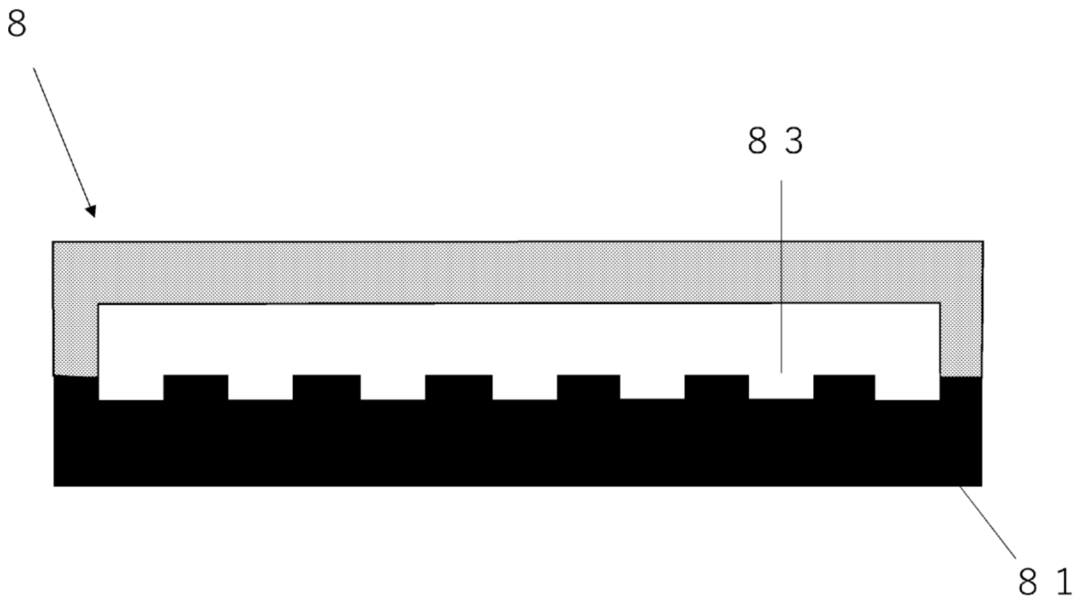


FIG. 8

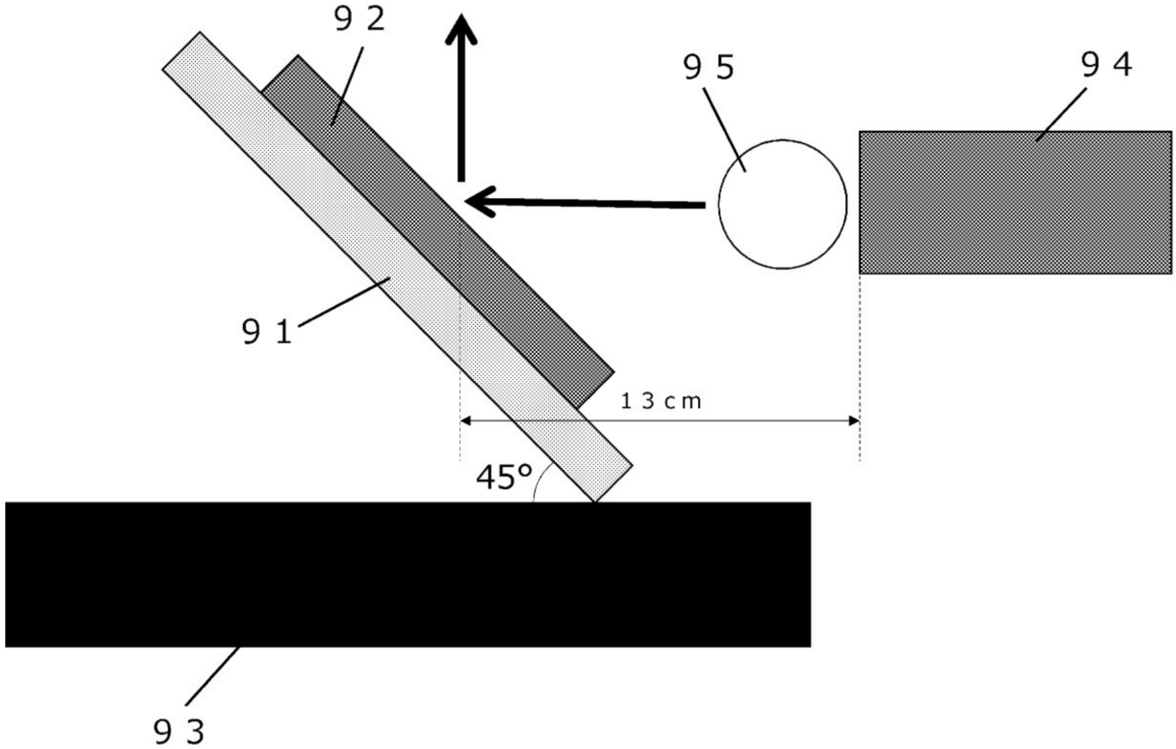


FIG. 9

## INTERNATIONAL SEARCH REPORT

International application No.
**PCT/JP2023/046729**

### A. CLASSIFICATION OF SUBJECT MATTER

***A63B 59/45***(2015.01)i; ***A63B 59/42***(2015.01)i; ***C08K 3/013***(2018.01)i; ***C08K 3/04***(2006.01)i; ***C08K 3/36***(2006.01)i; ***C08L 83/05***(2006.01)i; ***C08L 83/07***(2006.01)i; *A63B 102/16*(2015.01)n
FI: A63B59/45; A63B59/42; C08K3/013; C08K3/04; C08K3/36; C08L83/05; C08L83/07; A63B102:16

According to International Patent Classification (IPC) or to both national classification and IPC

### B. FIELDS SEARCHED

Minimum documentation searched (classification system followed by classification symbols)

A63B59/45; A63B59/42; C08K3/013; C08K3/04; C08K3/36; C08L83/05; C08L83/07; A63B102/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2018-171263 A (MIZUNO CORPORATION) 08 November 2018 (2018-11-08) entire text, all drawings | 1-8 |
| A | JP 2018-171262 A (MIZUNO CORPORATION) 08 November 2018 (2018-11-08) entire text, all drawings | 1-8 |
| A | JP 4-50247 A (MATERIAL ENG TECH LAB INC.) 19 February 1992 (1992-02-19) entire text, all drawings | 1-8 |
| A | CN 110639183 A (HANGZHOU FUYANG SANJIANG STATIONERY AND SPORTING GOODS CO., LTD.) 03 January 2020 (2020-01-03) entire text, all drawings | 1-8 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 February 2024** | **20 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/046729**

| Patent document cited in search report | Publication date (day/month/year) | Patent family member(s) | Publication date (day/month/year) |
|---|---|---|---|
| JP 2018-171263 A | 08 November 2018 | DE 102018204742 A1<br>CN 108686346 A | |
| JP 2018-171262 A | 08 November 2018 | DE 102018204748 A1<br>CN 108686347 A | |
| JP 4-50247 A | 19 February 1992 | (Family: none) | |
| CN 110639183 A | 03 January 2020 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011056004 A
- JP 2011056005 A
- JP 2022211916 A